# EUROPEAN PATENT APPLICATION

(11) **EP 1 582 423 A2**
(43) Date of publication of application: **05.10.2005**
(21) Application number: 05003067.5
(22) Date of filing: 14.02.2005
(51) Int. Cl.: B60R 21/20

(54) **Method of manufacturing airbag cover, airbag cover, and airbag module**

(30) Priority: 01.04.2004 JP 2004109085
(71) Applicant: TAKATA CORPORATION, Tokyo 106-8510 (JP)
(72) Inventor: Soejima, Naoki, Tokyo, 106-8510 (JP)
(74) Representative: Vossius & Partner

(57) **Abstract**

To provide a technique effective in rationally constructing an airbag cover for covering a vehicle airbag.

An airbag cover 100 is machined with an ultrasonic machining blade 216. A tear line 102 in which a continuous groove with a depth within the plate thickness of the airbag cover 100 is formed such that the cross section becomes "a zigzag cut shape," "a sealer cut shape," or "a step cut shape," and the plan view becomes "a meandering cut shape."

## Description

The present invention relates to a technique of constructing an airbag cover for covering a vehicle airbag.

Airbag systems mounted to vehicles include airbag covers for covering vehicle airbags. The airbag covers have a tear line (a linear groove) in their inner wall surfaces. In the event of a vehicle crash, the airbag covers are torn open from the tear line to allow deployment of the vehicle airbags to the exterior of the airbag covers. A known technique of making tear lines in the airbag covers by back end processes includes a technique by laser cut (e.g., refer to Patent Document 1: PCT Japanese Translation Patent Publication No. 2001-502996). Patent Document 1 presents a possibility of forming a tear line by laser cut. However, in manufacturing the airbag covers of this type, a more effective technique is required to form a tear line of a desired shape that is torn open in a desired state in the airbag covers.

The present invention is made in consideration of the foregoing requirement. Accordingly, it is an object of the present invention to provide a technique effective in rationally constructing an airbag cover for covering a vehicle airbag.

This object is achieved with the features of the claims. The invention according to the claims is a technique applicable to airbag covers mounted in various vehicles, such as cars, trains, motorcycles (saddle-type vehicles), aircraft, and ships and vessels.

A first invention of the present invention for achieving the object is a method of manufacturing an airbag cover according to Claim 1.
The method of manufacturing an airbag cover according to Claim 1 relates to a method of manufacturing an airbag cover for covering a vehicle airbag mounted on various vehicles. By the manufacturing method, the airbag cover is machined by ultrasonic machining means to form a continuous linear groove in the airbag cover. Typically, a formed airbag cover is machined by ultrasonic machining means after forming it to cut a liner groove. The linear groove is a linear groove having a continuous groove with a depth within the plate thickness of the plate-like airbag cover. The linear groove is a portion with a relatively small thickness at the portions of the airbag cover, which is so called a tear line. The airbag cover is torn open along the linear groove at the inflation of the vehicle airbag in a vehicle crash.

The "ultrasonic machining means" in this specification broadly includes various means capable of machining workpieces by transmitting (applying) ultrasonic waves to the workpieces. A typical example is means for machining (cutting) the workpieces with ultrasonic waves by applying a blade member (ultrasonic machining blade) to the workpieces. Examples other than the blade member include rod-like and plate-like ultrasonic machining means. A typical example of a machining unit that uses the ultrasonic machining means includes a unit with a structure for controlling the action of the ultrasonic machining blade by a machining robot. Thus, the machining action by the ultrasonic machining blade is controlled to form a desired locus.

The method of manufacturing an airbag cover according to the invention relates to a method of machining the airbag cover with ultrasonic machining means. In the machining with the ultrasonic machining means, the method includes at least the step of machining the linear groove in such a manner that the remaining thickness of the portions of the linear groove can be varied in the direction of the thickness and the linear groove is inclined in the direction of the thickness. To form a continuous linear groove with the ultrasonic machining means, the linear groove can be inclined in the direction of the thickness by varying the remaining thickness of the linear groove in the direction of the thickness. Here the "linear groove" broadly includes a continuous groove extending linearly in the direction of the thickness along the surface of the airbag cover, and an intermittent (discontinuous) groove extending linearly in the direction of the thickness along the surface of the airbag cover. The "inclined shape" broadly includes a linearly (like a linear function) inclined groove and an inclined groove in a curved shape (like a quadratic function). The inclined portion of the linear groove may have a specified angle relative to the plate thickness or alternatively may be formed vertically in the direction of the thickness. Typically, the linear groove is machined so that the cross section becomes "a zigzag cut shape," "a sealer cut shape," or "a step cut shape."
The method of manufacturing an airbag cover is more effective in preventing the deformation of the airbag cover itself which occurs during the process of welding another member to the machined airbag cover than a simple linear groove formed as a groove with a constant depth. This improves the appearance of the airbag cover. Furthermore, this is more effective in increasing durability to withstand external pressure loads than a simple linear groove formed as a linear groove with a constant depth.

A second invention of the present invention for achieving the object is a method of manufacturing an airbag cover according to Claim 2.
In the method of manufacturing an airbag cover according to Claim 1, the remaining thickness of the portions of the linear groove can be varied in the direction of the thickness depending on the load applied to the portions of the linear groove during inflation of the vehicle airbag.
By the method of manufacturing an airbag cover, the load strength of the linear groove can be varied at the portions, so that the timing of tear-open at the portions can be controlled.

In a vehicle crash, the deployment door of the airbag cover is torn open along the linear groove by the inflation of the vehicle airbag. However, an airbag cover of a type that is lifted up when the entire deployment door is not deployed must be torn open at different timings between the portions of the linear groove which is conductive to the lift-up and the portions that is finally conductive to the deployment of the deployment door. Accordingly, the invention is constructed such that the remaining thickness of the portions of the linear groove can be varied in the direction of the thickness depending on the load applied to the portions of the linear groove during inflation of the vehicle airbag. Thus, the deployment door can be controlled so as to be deployed after the entire deployment door is lifted up.

A third invention of the present invention for achieving the object is a method of manufacturing an airbag cover according to Claim 3.
In the method of manufacturing an airbag cover according to Claim 1 or 2, the linear groove is machined into a winding shape in plan view. The "winding shape" here includes a winding shape like a curve and a winding shape in zigzag. Typically, the linear groove is machined into a meandering cut shape in plan view.
The method of manufacturing an airbag cover is more effective in preventing the deformation of the airbag cover itself which occurs during the process of welding another member to the machined airbag cover and increasing durability to withstand external pressure loads.

A fourth invention of the present invention for achieving the object is an airbag cover according to Claim 4.
The airbag cover of Claim 4 is an airbag cover for covering a vehicle airbag. The airbag cover has a linear groove with a depth within the plate thickness of the airbag cover, the remaining thickness of the portions of the linear groove being variable and the linear groove being inclined along the thickness.
The airbag cover with such a structure is more effective in preventing the deformation of the airbag cover itself which occurs during the process of welding another member to the machined airbag cover than a simple linear groove formed as a groove with a constant depth. This improves the appearance of the airbag cover. Furthermore, this is more effective in increasing durability to withstand external pressure loads than a tear line formed as a simple linear groove with a constant depth.

A fifth invention of the present invention for achieving the object is an airbag cover according to Claim 5.
The airbag cover according to Claim 4 is constructed such that the remaining thickness of the portions of the linear groove can be varied in the direction of the thickness depending on the load applied to the portions of the linear groove during inflation of the vehicle airbag.
With such a structure of an airbag cover, the load strength of the linear groove can be varied at the portions, so that the timing of tear-open at the portions can be controlled.

A sixth invention of the present invention for achieving the object is an airbag module according to Claim 6.
The airbag module according to Claim 6 comprises a vehicle airbag, an airbag cover for covering the vehicle airbag, a linear groove with a depth within the plate thickness of the airbag cover, a container (retainer) for accommodating the vehicle airbag, gas supply means (inflator) for supplying inflation gas such that the vehicle airbag inflates from the container, and an airbag cover that is substantially the same as that according to Claim 5. The entire airbag module is mounted to vehicles. The airbag module of the invention can include a member to which the airbag cover is mounted, or a panel that is called an instrument panel.
The airbag module is constructed such that, in a vehicle crash, the vehicle airbag inflates by inflation gas supplied from the gas supply means, so that the airbag cover is torn open along a first linear groove of the linear groove to be lifted up toward an occupant protection region and then torn open along a second linear groove of the linear groove to be deployed into the occupant protection region.
With the structure of the airbag module, an airbag cover of a type that is lifted up before the deployment of the deployment door when the entire deployment door is not deployed can be controlled reliably so that the entire deployment door is lifted up by the tear-open of the first linear groove and then the deployment door deploys by the tear-open of the second linear groove, so that the vehicle airbag deploys in the occupant protection region.

According to the invention, in manufacturing an airbag cover having a linear groove formed by ultrasonic machining means, a tear line of a desired shape that is torn open in a desired state can be formed in the airbag cover by devising various machining methods for the linear groove.

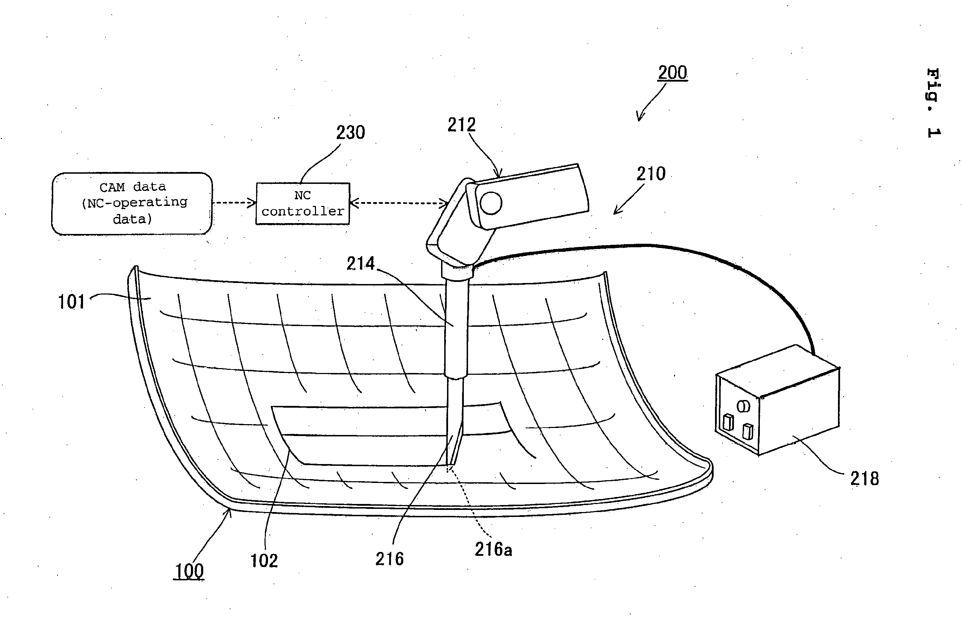

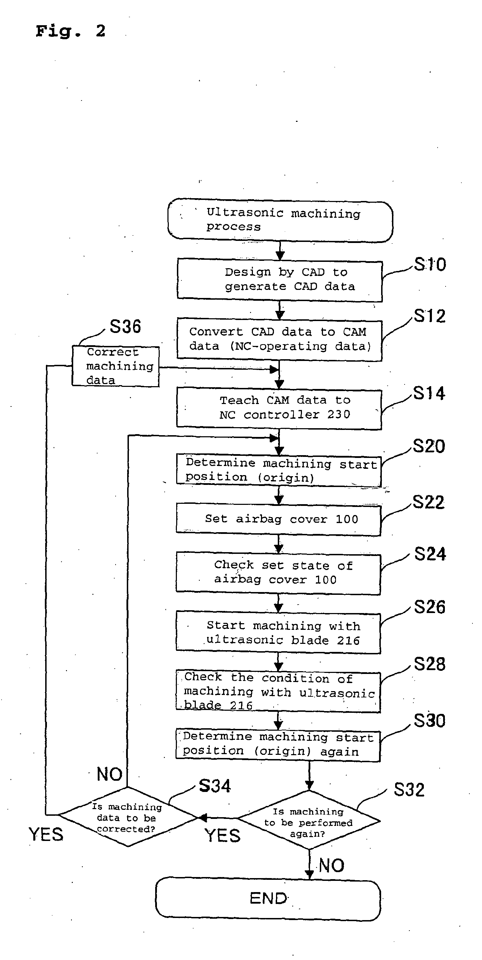

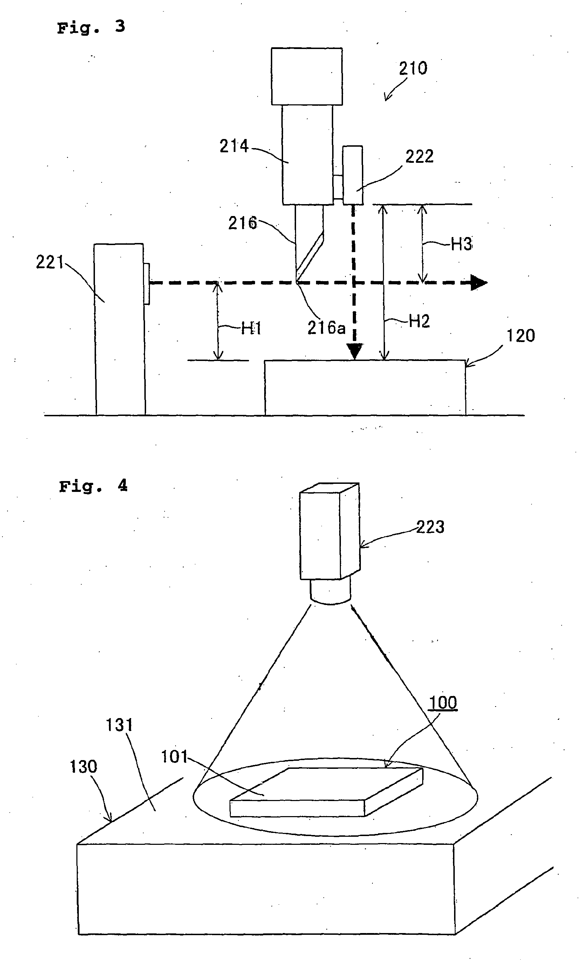

An embodiment of the present invention will be described hereinafter with reference to the drawings.
Fig. 1 is a diagram showing the structure of the airbag cover 100 according to the embodiment and the ultrasonic machining unit 200 for machining the airbag cover 100, presenting the ultrasonic machining of the airbag cover 100 by using the ultrasonic machining unit 200;
Fig. 2 is a flowchart for the ultrasonic machining process by the ultrasonic machining unit 200 of this embodiment;
Fig. 3 is a schematic diagram of the process of steps S20 to S32 in Fig. 2;
Fig. 4 is a schematic diagram of the process of step S24 in Fig. 2;
Fig. 5 is a schematic diagram of the process of step S30 in Fig. 2;
Fig. 6 is a schematic diagram of the process of step S30 in Fig. 2;
Fig. 7 is a cross-sectional view of a tear line 102 formed in the airbag cover 100 according to the embodiment;
Fig. 8 is a cross-sectional view of the tear line 102 formed in the airbag cover 100 according to the embodiment;
Fig. 9 is a cross-sectional view of the tear line 102 formed in the airbag cover 100 according to the embodiment;
Fig. 10 is a plan view of the tear line 102 formed in the airbag cover 100 according to the embodiment;
Fig. 11 is a cross sectional view showing the structure of an airbag module, presenting the condition of the airbag cover 100 before a vehicle airbag 150 inflates;
Fig. 12 is a cross-sectional view showing the structure of the airbag module, presenting the action of the airbag cover 100 during the process of inflation of the vehicle airbag 150;
Fig. 13 is a cross-sectional view showing the structure of the airbag module, presenting the action of the airbag cover 100 during the process of inflation of the vehicle airbag 150;
Fig. 14 is a diagram showing the structure of the airbag cover 100 according to the embodiment and an ultrasonic machining unit 300 according to another embodiment for machining the airbag cover 100, presenting the ultrasonic machining of the airbag cover 100 by using the ultrasonic machining unit 300;
Fig. 15 shows the flowchart for the ultrasonic machining process by the ultrasonic machining unit 300;
Fig. 16 is a flowchart of the copying-teaching process in Fig. 15;
Fig. 17 is a flowchart for the machining process of Fig. 15; and
Fig. 18 is a schematic diagram of the process of step S113 in Fig. 16.
The embodiment relates to a technique of forming a tear line 102 in the back surface 101 of an airbag cover 100 for covering a vehicle airbag by ultrasonic machining. The airbag cover 100 corresponds to "an airbag cover" of the present invention.
Referring to Fig. 1, the structure of the airbag cover 100 and an ultrasonic machining unit 200 will first be described. Fig. 1 shows the structure of the airbag cover 100 according to the embodiment and the ultrasonic machining unit 200 for machining the airbag cover 100, showing the ultrasonic machining of the airbag cover 100 by using the ultrasonic machining unit 200.

The airbag cover 100 in Fig. 1 has a three-dimensional (solid) plate-like structure made of a resin material such as a polypropylene (PP) material or an olefinic elastomer (TPO) material. The back surface 101 of the airbag cover 100 is defined as the back surface when a surface that faces an occupant is the surface, with the airbag cover 100 mounted. The tear line 102 is a line with a reduced thickness for allowing the airbag cover 100 to be torn open at the inflation of a vehicle airbag (a vehicle airbag 150 to be described later), which is, in this embodiment, a linear groove in the back surface 101 of the airbag cover 100. The tear line 102 corresponds to "a linear groove" of the invention.

As shown in Fig. 1, the ultrasonic machining unit 200 is roughly classified into a driving section 210 and an NC controller 230. The driving section 210 includes a drive arm 212, an ultrasonic vibrator 214, an ultrasonic machining blade 216, an ultrasonic wave oscillator 218, etc. The ultrasonic machining unit 200 of this embodiment also includes displacement gauges 221 and 222 and an image check camera 223, to be described later. The ultrasonic machining unit 200 corresponds to "ultrasonic machining means" of the invention.

The drive arm 212 is part of a machining robot and is controlled according to a signal inputted from the NC controller 230 to adjust the position, angle, travel locus, etc. of the edge 216a of an ultrasonic machining blade 216.
The ultrasonic vibrator 214 has the function of transmitting ultrasonic waves oscillated by the ultrasonic wave oscillator 218 to the ultrasonic machining blade 216.
The ultrasonic machining blade 216 is used to form the tear line 102 in the back surface 101 of the airbag cover 100. In this embodiment, a machining blade of a width of, e.g., 1 mm can be used. Members that can machine workpieces by transmitting (applying) ultrasonic waves to the workpieces can be other than the blade member like the ultrasonic machining blade 216, such as rod-like or plate-like members.
The ultrasonic wave oscillator 218 has the function of oscillating ultrasonic waves of a specified frequency. In this embodiment, an oscillator capable of oscillating an ultrasonic wave with a frequency of, e.g., 22 kHz can be used.
The NC controller 230 processes machining data to form the tear line 102 in the back surface 101 of the airbag cover 100 and has the function of inputting, operating, and outputting machining data for the airbag cover 100, which is not shown particularly.

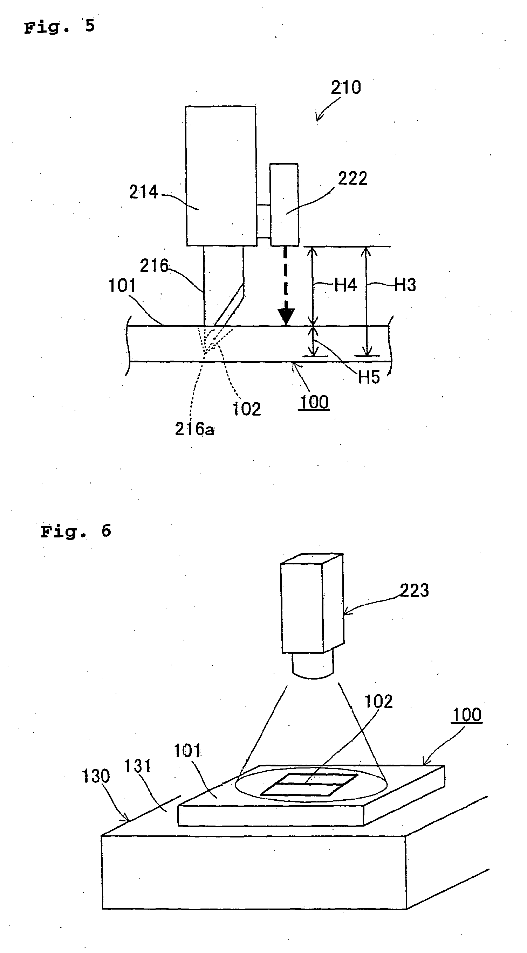

Referring to Figs. 2 to 6, the procedure of machining the tear line 102 in the formed airbag cover 100 by back end processes with the ultrasonic machining unit 200 will be described. Fig. 2 is a flowchart for the ultrasonic machining process by the ultrasonic machining unit 200 of this embodiment. Fig. 3 is a schematic diagram of the process of steps S20 to S32 in Fig. 2. Fig. 4 is a schematic diagram of the process of step S24 in Fig. 2.
Figs. 5 and 6 are schematic diagrams of the process of step S30 in Fig. 2.
The machining process by "a method of manufacturing an airbag cover" according to the embodiment of the invention is roughly classified into a data processing for processing machining data before processing and a machining process of carrying out machining with an ultrasonic machining unit.

### [Data Processing]

In the data processing, machining data is obtained before actual machining of the airbag cover 100. The data processing includes steps S10 to S14, as shown in Fig. 2.

In step S10, CAD data (machining data) is produced by computer-aided design (CAD) according to design information on the airbag cover 100. Here, for example, design information stored in a computer is extracted to a graphic display unit and then designing is performed while viewing the screen.

In step S12, the CAD data obtained in step S10 is converted by computer-aided manufacturing (CAM) to create CAM data. The CAM data serves as machining data (NC-operating data) in the NC controller 230.

In step S14, the CAM data (machining data) obtained in step S10 is taken into the NC controller 230, wherein the CAM data is taught to the NC controller 230. In this embodiment, the CAM data taken into the NC controller 230 can be corrected by the NC controller 230 according to actual machining results.

### [Machining Process]

Upon completion of the data processing, the airbag cover 100 is actually machined. The machining process includes steps S20 to S30, shown in Fig. 2.

In step S20, the machining start position (origin) of the ultrasonic machining blade 216 is determined before the machining. In determination, for example, the displacement gauges 221 and 222 are used. The displacement gauge 221 is provided to the base, while the displacement gauge 222 is provided to the ultrasonic machining blade 216 of the driving section 210. With such a structure, as shown in Fig. 3, the height H1 (distance) from the top of a reference block 120 to the edge 216a of the ultrasonic machining blade 216 is determined by the displacement gauge 221. Also, the height H2 (distance) from the top of the reference block 120 to the displacement gauge 222 is determined by the displacement gauge 222. Then the height H3 from the displacement gauge 222 to the edge 216a of the ultrasonic machining blade 216 is determined (derived) by calculating the difference (H2 - H1) between the determined heights H1 and H2. Thus the machining start position (origin) of the ultrasonic machining blade 216 is determined.

In step S20, the number of points for determining the height H1 by the displacement gauge 221 and the height H2 by the displacement gauge 222 can be set as appropriate in consideration of the shape of the airbag cover 100 etc. For example, it is preferable to increase the number of points for determining the heights H1 and H2 as the shape of the airbag cover 100 becomes complicated.

In step S22, the airbag cover 100 is placed on an airbag-cover receiver jig (an airbag-cover receiver jig 130 in Fig. 4). An airbag-cover receiving surface 131 of the airbag-cover receiver jig 130 has a shape corresponding to the surface of the airbag cover 100. The airbag-cover receiver jig 130 mounts a suction mechanism by air (not shown). The suction mechanism operates to allow the airbag cover 100 to be held on the airbag-cover receiving surface 131. The suction mechanism of the airbag-cover receiver jig 130 includes suction-pressure detection means (not shown) capable of detecting the suction pressure.

In step S24, the set state of the airbag cover 100 is checked, wherein the state of adhesion between the airbag cover 100 and the airbag-cover receiver jig 130 is checked by the suction pressure of the suction mechanism of the airbag-cover receiver jig 130 and also the displacement of the airbag cover 100 is checked by using the image check camera 223, as shown in Fig. 4. Thus, an operator can check the set state of the airbag cover 100.

In step S26, actual machining with the ultrasonic machining blade 216 is started. At that time, the ultrasonic wave oscillator 218 oscillates an ultrasonic wave of a frequency of e.g., 22 kHz and transfers the ultrasonic wave to the ultrasonic machining blade 216 via the ultrasonic vibrator 214. The drive arm 212 is controlled according to the input signal from the NC controller 230 to adjust the position of the edge 216a of the ultrasonic machining blade 216 so that the machining action of the ultrasonic machining blade 216 forms a desired locus. The machining speed of the ultrasonic machining blade 216 can be, e.g., 30 mm/s. The machining speed is 1.5 times as fast as 20 mm/s by laser machining, so that it is effective in increasing the production efficiency of the airbag cover 100.
The conditions of machining such as the frequency of the ultrasonic wave oscillated by the ultrasonic wave oscillator 218 and a machining speed of the ultrasonic machining blade 216 can be set as appropriate depending on the conditions of workpieces such as the material and plate thickness of the airbag cover.

In step S28, the state of machining with the ultrasonic machining blade 216 is checked at (during) the machining with the ultrasonic machining blade 216. As shown in Fig. 5, the height H4 from the back surface 101 of the airbag cover 100 to the displacement gauge 222 is determined by the displacement gauge 222.

The depth H5 of machining (the depth of cutting) of the tear line 102 can be obtained (derived) by calculating the difference (H3 - H4) between the height H3 (the height from the displacement gauge 222 to the edge 216a of the ultrasonic machining blade 216) and the height H4, which are determined in advance in step S20. As described above, in this embodiment, the depth H5 of machining of the tear line 102 can be estimated indirectly from other determination information without directly determining the depth H5 of machining of the tear line 102. Also the remaining thickness (the remaining thickness in the invention) of the airbag cover 100 at the portion of the tear line 102 can be checked according to the depth H5 of machining and the data in the NC controller 230. Thus, the airbag cover 100 having the continuous tear line 102 with a desired machining depth can be manufactured. The machining depth H5 of the tear line 102 is sometimes difficult to determine directly when the shape of the airbag cover, the workpiece, is complicated three-dimensionally. However, this embodiment is particularly effective in machining the tear line 102 with a desired depth in the three-dimensional airbag cover, since the information on the machining depth H5 of the tear line 102 is continuously acquired during machining to determine a high-reliability machining depth H5.

In step S28, the number of points for determining the height H4 by the displacement gauge 222 can be set as appropriate in consideration of the shape of the airbag cover 100 etc. For example, it is preferable to increase the number of points for determining the height H4 as the shape of the airbag cover 100 becomes complicated. Also, as shown in Fig. 6, the machining locus of the tear line 102 is checked with the image check camera 223.

In step S30, the machining start position (origin) of the ultrasonic machining blade 216 is checked again by the operation similar to that of step S20.

After completion of step S30, it is determined in step S32 whether or not to perform the machining of another airbag cover again, wherein when the machining is not to be performed again (NO in step S32), the machining process is completed. On the other hand, when the machining is to be performed again (YES in step S32), it is determined in step S34 whether or not to correct the machining data according to actual machining results. When the machining data is to be corrected (YES in step S34), the machining data is corrected in step S36 and then the procedure returns to step S14. Conversely, when the machining data is not to be corrected (YES in step S34), the process returns to step S20.

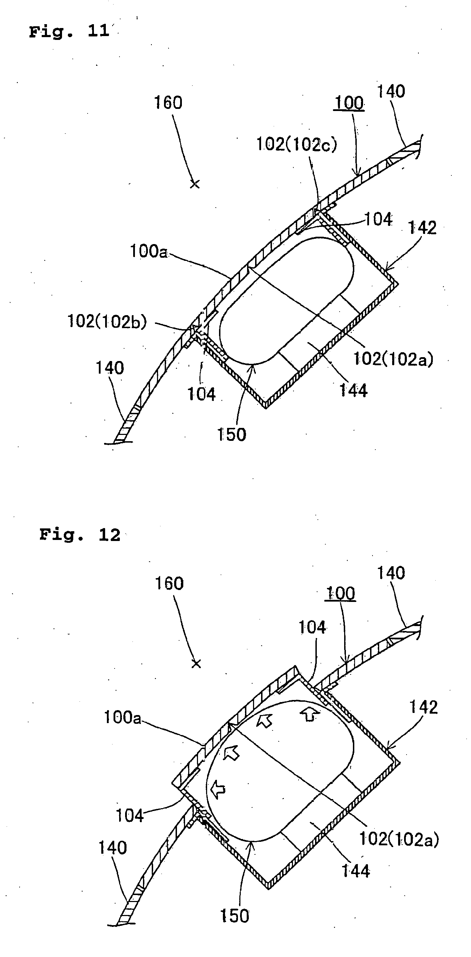

The airbag cover 100 manufactured by the foregoing manufacturing method can be combined to vehicles, as shown in Fig. 11. Fig. 11 is a cross sectional view showing the structure of an airbag module, presenting the condition of the airbag cover 100 before the vehicle airbag 150 inflates. As shown in Fig. 11, the airbag module according to the embodiment includes the airbag cover 100, an instrument panel 140 on which the airbag cover 100 is mounted, the vehicle airbag 150 (corresponding to the "vehicle airbag" in the invention), a container (retainer) 142 in which the folded vehicle airbag 150 is accommodated, gas supply means (inflator) 144 accommodated in the container 142, for supplying inflation gas into the vehicle airbag 150, etc. The airbag module corresponds to the "airbag module" of the invention. Fig. 11 also shows the tear line 102, a tear line 102a extending in the center of the airbag cover 100 and tear lines 102b and 102c extending on both sides of the tear line 102a and substantially in parallel to the tear line 102a.

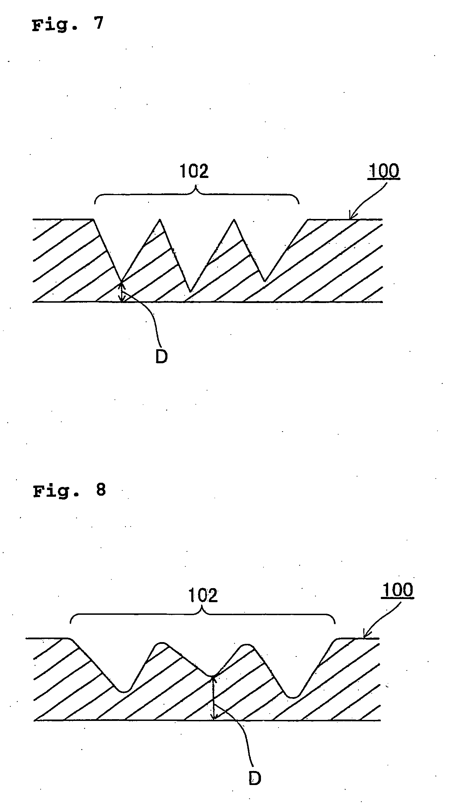

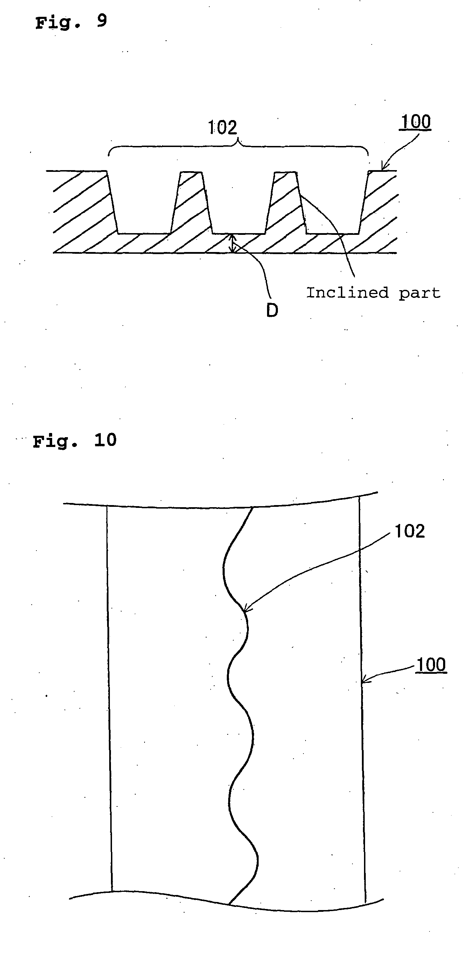

Referring to Figs. 7 to 10, the machining of the airbag cover 100 in step S26 of the ultrasonic machining process will be specifically described, which is the characteristic of this embodiment. Figs. 7 to 9 show the cross sections of the tear line 102 formed in the airbag cover 100 of the embodiment. Fig. 10 shows the plan view of the tear line 102 formed in the airbag cover 100 of the embodiment.

In this embodiment, the position of the edge 216a of the ultrasonic machining blade 216 is adjusted so that the cross section of the tear line 102 becomes "a zigzag cut shape" (linear shape) as shown in Fig. 7, "a sealer cut shape" (curved shape) as shown in Fig. 8, or "a step cut shape" as shown in Fig. 9 and the plan view of the tear line 102 becomes "a meandering cut shape (winding shape)" as shown in Fig. 10. The "inclined part" extending along the thickness in the "step cut shape" of Fig. 9 may be formed at a specified inclination or substantially vertically relative to the direction of thickness.
Thus, the remaining thickness of the portions of the continuous tear line 102 can be varied in the direction of thickness and inclined in the direction of thickness and the tear line 102 can be curved in plan view. The tear line 102 with such a structure is more effective in preventing the deformation of the airbag cover itself, which occurs during the process of welding another member to the machined airbag cover, than a simple tear line formed as a linear groove with a constant depth. This improves the appearance of the airbag cover. Furthermore, this is more effective in increasing durability to withstand external pressure loads than a simple tear line formed as a linear groove with a constant depth.

As will be described later in detail, in this embodiment, in step S26, the cross section of the tear line 102, or the remaining thickness D of the airbag cover 100 at the tear line 102, can be varied depending on the load applied to the portions of the tear line 102 at the inflation of the vehicle airbag 150. More specifically, the airbag cover 100 is constructed such that the remaining thickness D of the tear line 102a to which a relatively high load is applied is larger than the thickness D of the tear lines 102b and 102c to which a relatively low load is applied. In other words, in this embodiment, the thicknesses of the tear lines 102a, 102b, and 102c are set so that the tear lines 102b and 102c are torn open earlier than the tear line 102a at the inflation of the vehicle airbag 150. In this way, step S28 corresponds to the machining that "the remaining thicknesses along the thickness of the portions of the linear groove can be varied depending on the load applied to the portions of the linear groove at the inflation of the vehicle airbag."

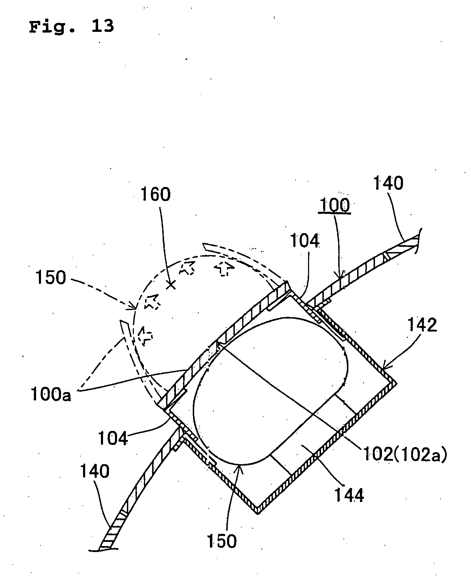

The airbag cover 100 with such a structure acts as shown in Figs. 12 and 13 during the process of the inflation of the vehicle airbag 150. Figs. 12 and 13 are cross sectional views showing the structure of the airbag module, presenting the action of the airbag cover 100 during the process of the inflation of the vehicle airbag 150.
In a front crash of a vehicle, the gas supply means 144 is activated to deploy the vehicle airbag 150 by inflation gas supplied from the gas supply means 144.

As shown in Fig. 12, the tear lines 102b and 102c (corresponding to "a first linear groove of the invention) of the airbag cover 100 on both sides of the tear line 102a are first torn open as the vehicle airbag 150 inflates. Specifically speaking, the embodiment is constructed such that the remaining thickness D of the tear line 102a is larger than the remaining thicknesses D of the tear lines 102b and 102c. Accordingly, the tear lines 102b and 102c can be torn open earlier than the tear line 102a even when a relatively high load is applied to the tear line 102a from the vehicle airbag 150. Thus, a deployment door 100a of the airbag cover 100 protrudes along with an inner part 104 toward an occupant protection region 160 ("an occupant protection region" of the invention) ahead of an occupant. The action of the deployment door 100a of the airbag cover 100 is called "lift-up."

When the vehicle airbag 150 further inflates, the airbag cover 100 is then torn open along the tear line 102a (corresponding to "a second linear groove" of the invention), as indicated by the alternate long and short dashes line in Fig. 13, and a pair of the deployment doors 100a deploy into a double open state (like a gatefold door). This allows the deployment of the vehicle airbag 150 into the occupant protection region 160. In this way, the vehicle airbag 150 deploys through the deployed deployment door 100a to the exterior of the airbag cover 100 while protruding into the occupant protection region 160. As has been described, the airbag cover 100 of this embodiment is torn open along the tear line 102a after the deployment door 100a is once lifted up, so that the vehicle airbag 150 inflates more reliably into the occupant protection region 160.

As described above, according to the embodiment, the tear line 102 of a desired shape that is torn open in a desired way can reliably be formed in the airbag cover 100.
The embodiment offers the advantage of preventing the deformation of the airbag cover itself, which occurs during the process of welding another member to the machined airbag cover by devising the cross section and plan view of the tear line 102. This improves the appearance of the airbag cover.
Particularly, in this embodiment, the remaining thickness D of the tear line 102a to which a relatively high load is applied is larger than the remaining thicknesses D of the tear lines 102b and 102c to which a relatively low load is applied. Accordingly, the load on the tear line 102 can be varied depending on the portions, so that the timing of tear-open at the portions can be controlled. This can solve the problem of "difficulty in lifting up the deployment door 100a of the airbag cover 100 at the front crash of a vehicle."

### [Other Embodiments]

It is to be understood that the invention is not limited to the above-described embodiment but various applications and modifications can be made. For example, the following applications can be made.

In the above embodiment, the cross section of the tear line 102 is "a zigzag cut shape (linear shape)," "a sealer cut shape (curved shape)," or "a step cut shape" and also the plan view of the tear line 102 is "a meandering cut shape." However, the tear line 102 can be of any other shapes of which the cross section is inclined, as necessary. The airbag cover 100 has only to be constructed such that at least the remaining thickness of the tear line can be varied in the direction of thickness and its linear groove is inclined along the thickness, as compared with a simple linear groove with a constant depth. This structure is effective in preventing the deformation of the airbag cover itself, which occurs during the process of welding another member to the machined airbag cover, and increasing durability to withstand external pressure loads.

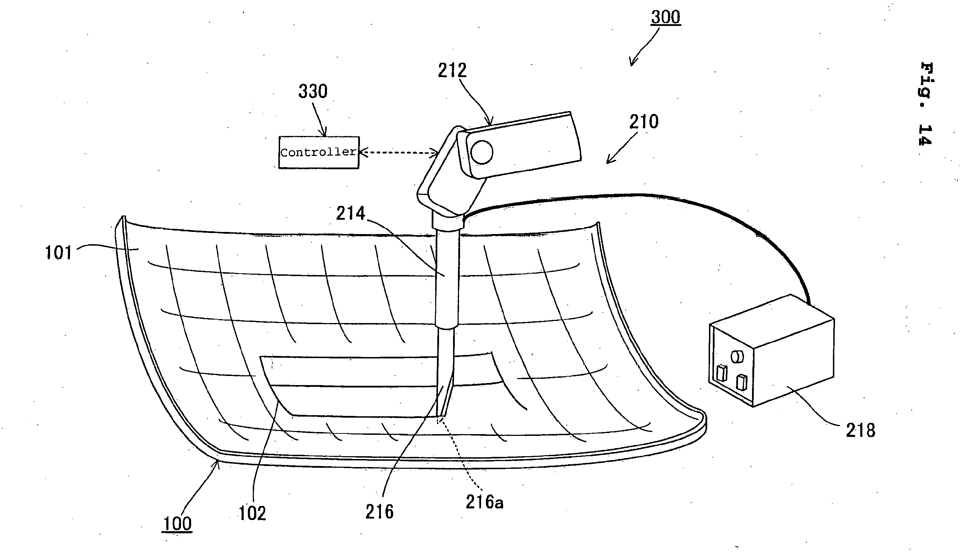

The invention can use an ultrasonic machining unit with another structure to form the tear line 102 in a formed airbag cover by back end steps, in place of the ultrasonic machining unit 200 according to the foregoing embodiment. Referring to Figs. 14 to 18, the structure of an ultrasonic machining unit 300 according to another embodiment, and a method of ultrasonic machining using the ultrasonic machining unit 300 will be described. In Figs. 14 to 18, the same components as those of Figs. 1 to 13 are given the same reference numerals.

The ultrasonic machining unit 300 serving as "ultrasonic machining means," shown in Fig. 14, stores machining data for the ultrasonic machining blade 216. The machining data includes the position, angle, travel locus, etc. of the drive arm 212 during ultrasonic machining, which is obtained in "copying-teaching process," to be described later, and data on cut patterns.

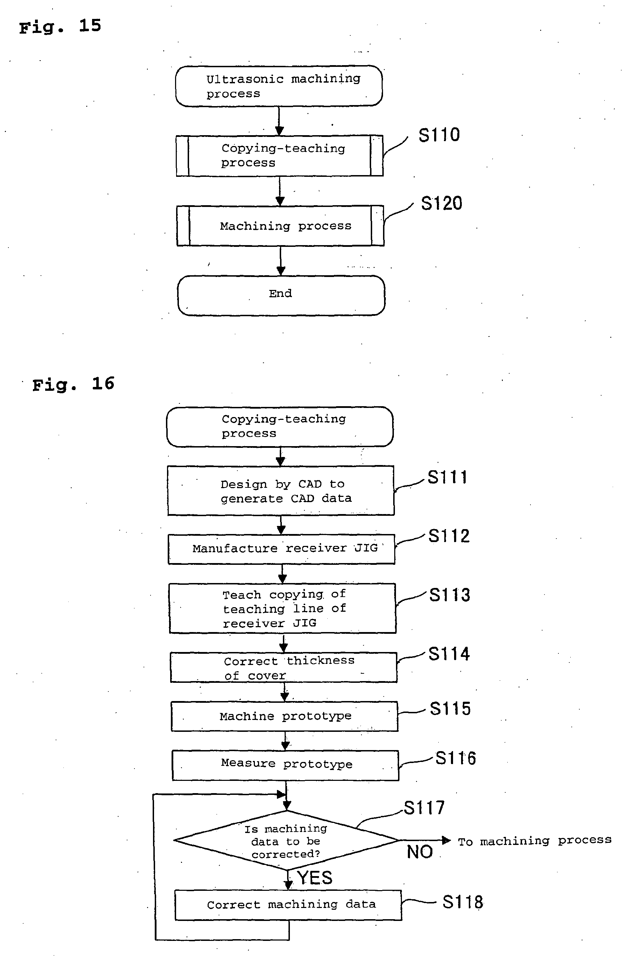

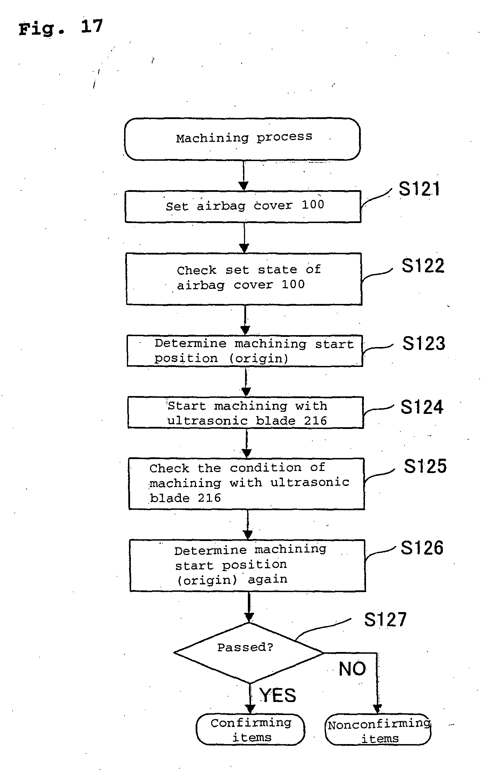

Fig. 15 shows the flowchart for the ultrasonic machining process by the ultrasonic machining unit 300.
As shown in Fig. 15, the "ultrasonic machining process" for the airbag cover 100 of the embodiment is roughly classified into "a copying-teaching process" (step S110) for processing machining data before machining and "a machining process" (step S120) for actual machining with the ultrasonic machining unit. In the "copying-teaching process," the processes of steps S111 to S118 in Fig. 16 are performed in sequence; in the "machining process," the processes of steps S121 to S127 in Fig. 17 are performed.

### [Copying-Teaching Process]

The copying-teaching process is a process for obtaining data on the position, angle, travel locus, etc. of the ultrasonic machining blade 216 as machining data during ultrasonic machining before the actual ultrasonic machining (tear line machining) of the airbag cover 100.

Fig. 16 is a flowchart of the copying-teaching process in Fig. 15.
As shown in Fig. 16, in the copying-teaching process, in step S111, CAD data (machining data) is first produced by computer-aided design (CAD) according to design information on the airbag cover 100. Here, for example, design information stored in a computer is extracted to a graphic display unit and designing is performed while viewing the screen. In step S112, the airbag-cover receiver jig 130 of a shape suitable for ultrasonic machining (tear line machining) of the airbag cover 100 is manufactured.

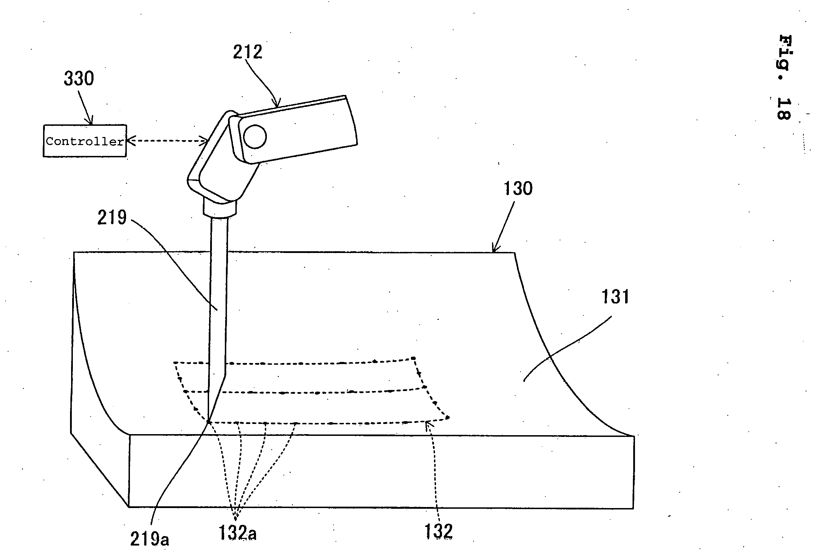

Fig. 18 is a schematic diagram of the process of step S113 in Fig. 16.
As shown in Fig. 18, according to this embodiment, in executing step S113 of Fig. 16, a teaching line 132 is formed on the airbag-cover receiving surface 131 of the airbag-cover receiver jig 130. The teaching line 132 is a machining locus corresponding to the tear line 102.
In step S113 of Fig. 16, a controller 330 is taught copying data to acquire machining data for the ultrasonic machining blade 216. More specifically, a member-to-be-taught 219 follows the teaching line 132 on the airbag-cover receiving surface 131, so that the controller 330 is given copying data on the position, angle, travel locus, etc. of the ultrasonic machining blade 216 during machining. The member-to-be-taught 219 is an imitation of the ultrasonic machining blade 216 and is mounted to the drive arm 212 during copying teaching, in place of the ultrasonic machining blade 216. The member-to-be-taught 219 is moved such that the tip 219a of the member-to-be-taught 219 holds multiple teaching hold points 132a on the teaching line 132 in sequence and as such, the controller 330 is given copying teaching, so that the copying data can be stored automatically in the controller 330. The copying teaching may be made by continuously sliding the tip of the member-to-be-taught 219 on the teaching line 132 continuously.
Step S113 is a step for acquiring (deriving) copying data in such a way that the member-to-be-taught 219 follows the teaching line 132 on the airbag-cover receiving surface 131 of the airbag-cover receiver jig 130.

The copying data acquired by the copying-teaching in step S113 is changed to correction data in which the machining thickness of the airbag cover 100 is corrected in step S114. Specifically, in step S113, the airbag-cover receiving surface 131 of the airbag-cover receiver jig 130 is used as a reference plane for copying-teaching. Accordingly, on the assumption that the airbag cover 100 is actually placed on the airbag-cover receiving surface 131 (reference plane), data of a specified thickness of the airbag cover 100 offset from the airbag-cover receiving surface 131 becomes correction data. Typically, the position where the thickness at the bottom of the groove of the tear line 102 is offset upward from the airbag-cover receiving surface 131 becomes the assumed machining position of the airbag cover 100. The correction data acquired in step S114 is taught (stored) to the controller 330.
Step S114 is a step for teaching correction data in which the copying data acquired in step S113 is corrected for the thickness of the airbag cover 100 to the controller 330.

In step S115 of Fig. 16, the drive arm 212 is controlled via the controller 330 according to the correction data obtained in step S114 and the prototype of the airbag cover 100 is actually produced. At that time, the member-to-be-taught 219 used in copying teaching is replaced with the ultrasonic machining blade 216. The prototype of the airbag cover 100 is manufactured in such a manner that an input signal corresponding to the correction data acquired in step S114 is transmitted from the controller 330 to the drive arm 212. Step S115 is a step for manufacturing the prototype of the airbag cover 100 by controlling the drive arm 212 according to the correction data taught in step S114.

In step S116, the actual size of the prototype of the airbag cover 100 acquired in step S115 is measured. Then, in step S117, it is determined from the measurement of the size of the prototype in step S116 whether or not there is the need for correcting the machining data for the drive arm 212 during machining. When it is determined that the data needs to be corrected (YES in step S117), the data is corrected in step S118, and the procedure returns to step S117. In other words, the correction data stored in the controller 330 in step S114 is updated to the correction data acquired in step S118 and taught to the controller 330 as machining data. In contrast, when it is determined that there is no need to correct the data (NO in step S117), the "copying-teaching process" is completed and the procedure proceeds to "machining process" in Fig. 17. In that case, the correction data stored in the controller 330 is not updated to correction data and is taught to the controller 330 as unchanged machining data.
Steps S116 to S118 are steps for measuring the size of the prototype of the airbag cover 100 manufactured in step S115 and correcting the correction data to machining data on the basis of the measurement.

### [Machining Process]

The machining process is a process for performing actual ultrasonic machining (tear line machining) of the airbag cover 100 according to the machining data acquired in the copying-teaching process (steps S111 to S118).

Fig. 17 is a flowchart for the machining process of Fig. 15.
As shown in Fig. 17, in the machining process, in step S121, the airbag cover 100 is placed on the airbag-cover receiving surface 131 of the airbag-cover receiver jig 130 in Fig. 18. In step S121, the suction mechanism (not shown) of the airbag-cover receiver jig 130 is activated.

In step S122, the set state of the airbag cover 100 is checked, wherein the state of adhesion between the airbag cover 100 and the airbag-cover receiver jig 130 is checked by the suction pressure determined by the suction-pressure detection means (not shown) and the displacement of the airbag cover 100 is checked by using the image check camera 223, as in the method described with reference to Fig. 4. Thus, the operator can check the set state of the airbag cover 100.

In step S123, the machining start position (origin) of the ultrasonic machining blade 216 is determined before the machining. In determination, the displacement gauges 221 and 222 are used, as in the method described with reference to Fig. 3. Thus the machining start position (origin) of the ultrasonic machining blade 216 is determined.

In step S124, actual machining (machining of a tear line) with the ultrasonic machining blade 216 is started. The machining is performed in such a way that an input signal corresponding to the machining data acquired in step S114 or the machining data updated in step S118 is transmitted from the controller 330 to the drive arm 212.

In step S125, the state of machining with the ultrasonic machining blade 216 is checked at (during) the ultrasonic machining with the ultrasonic machining blade 216 in step S124, wherein the height H4 from the back surface 101 of the airbag cover 100 to the displacement gauge 222 is determined by the displacement gauge 222, as in the method described with reference to Fig. 5. Also, the machining locus of the tear line 102 is checked with the image check camera 223, as in the method described with reference to Fig. 6.

In step S126, the machining start position (origin) of the ultrasonic machining blade 216 is checked again by the operation similar to that of step S123.

Finally, in step S127, the acceptability of the ultrasonic machining of the airbag cover 100 is determined. When it is determined that the ultrasonic machining of the airbag cover 100 has passed the criteria (YES in step S127), the airbag cover 100 is determined to be "a conforming item." On the other hand, when it is determined that the ultrasonic machining of the airbag cover 100 has failed the criteria (NO in step S127), the airbag cover 100 is determined to be "a non-conforming item."
Thus, repeating the steps S121 to S127 allows the airbag cover 100 having the tear line 102 formed in the back surface 101 by the ultrasonic machining to be manufactured in large quantities.

The method of ultrasonic machining with the ultrasonic machining unit 300 also offers the advantage of "reliably forming a tear line 102 of a desired shape that is torn open in a desired way in the airbag cover 100," as with the ultrasonic machining unit 200.
Furthermore, the use of the ultrasonic machining unit 300 is effective in reducing the cost of equipment because the data for machining the airbag cover 100 is produced by the copying-teaching process in which the member-to-be-taught 219 copies the airbag-cover receiver jig 130, so that there is no need for a converter for converting data from CAD data to CAM data (NC-operating data) and an NC controller for machining according to CAM data. The embodiment in which machining data is acquired by copying the original product is effective in simplifying the teaching procedure. Once machining data is obtained in the copying-teaching process, then the desired tear line 102 can be formed in the airbag cover 100 by controlling the drive arm 212 according to the machining data, thus simplifying the process of forming the tear line 102 in the airbag cover and reducing manufacturing cost. Accordingly, the ultrasonic machining unit 300 is particularly effective in manufacturing the airbag cover 100 having the tear line 102 in large quantities.

## Claims

1. A method of manufacturing an airbag cover for covering a vehicle airbag whereby a linear groove with a depth within the plate thickness of the airbag cover is formed in the airbag cover by ultrasonic machining means, the method comprising the step,of:
machining the linear groove by the ultrasonic machining means in such a manner that the remaining thickness of the portions of the linear groove can be varied in the direction of the thickness and the linear groove is inclined in the direction of the thickness.

2. The method of manufacturing an airbag cover according to Claim 1, wherein
the linear groove is machined by the ultrasonic machining means in such a manner that the remaining thickness of the portions of the linear groove can be varied in the direction of the thickness depending on the load applied to the portions of the linear groove during inflation of the vehicle airbag.

3. The method of manufacturing an airbag cover according to Claim 1 or 2, wherein
the linear groove is machined by the ultrasonic machining means into a winding shape in plan view.

4. An airbag cover for covering a vehicle airbag, wherein
the airbag cover has a linear groove with a depth within the plate thickness of the airbag cover, the remaining thickness of the portions of the linear groove being variable in the direction of the thickness and the linear groove being inclined in the direction of the thickness.

5. The airbag cover according to Claim 4, wherein
the remaining thickness of the portions of the linear groove can be varied in the direction of the thickness depending on the load applied to the portions of the linear groove during inflation of the vehicle airbag.

6. An airbag module comprising a vehicle airbag, an airbag cover for covering the vehicle airbag, a linear groove with a depth within the plate thickness of the airbag cover, a container for accommodating the vehicle airbag, and gas supply means for supplying inflation gas such that the vehicle airbag inflates from the container, wherein
the remaining thickness of the portions of the linear groove of the airbag cover can be varied in the direction of the thickness depending on the load applied to the portions of the linear groove during inflation of the vehicle airbag; and
in a vehicle crash, the vehicle airbag inflates by the inflation gas supplied from the gas supply means, so that the airbag cover is torn open along a first linear groove of the linear groove to be lifted up toward an occupant protection region and then torn open along a second linear groove of the linear groove to be deployed into the occupant protection region.
